# EUROPEAN PATENT APPLICATION

(11) **EP 2 466 430 A1**
(43) Date of publication of application: **20.06.2012**
(21) Application number: 10819810.2
(22) Date of filing: 21.01.2010
(51) Int. Cl.: G06F 3/044

(54) **CAPACITIVE TOUCH-CONTROL SCREEN**

(30) Priority: 30.09.2009 CN 200910205206
(71) Applicant: Inferpoint Systems Limited, Road Town, Tortola (VG)
(72) Inventor: CHEN, Qiliang, Shenzhen Guangdong 518052 (CN)
(74) Representative: Moore, Graeme Patrick
(86) International application number: PCT/CN2010/070313
(87) International publication number: WO 2011/038581

(57) **Abstract**

A capacitive touch-control screen (100) is provided. A return electrode (130) of a touch-control signal is formed on the capacitive touch-control screen (100) or an application product having the capacitive touch-control screen (100), a touch-control detection electrode (120) for detecting change in the touch-control signal and the touch-control return electrode (130) are connected to different output terminals (151,152) of a touch-control excitation source (150) respectively, a closed touch-control loop is formed among the touch-control excitation source (150), the touch-control detection electrode (120), the touch-control return electrode (130) and a coupling capacitance between the touch-control detection electrode (120) and the touch-control return electrode (130), the touch-control signal flow from the touch-control excitation source (150) to the touch-control detection electrode (120), then flow back to the touch-control excitation source (150) from the touch-control return electrode (130); and then a touch-control system is isolated from other systems to prevent from the signal interference between the different systems, to allow the touch-control signal to flow in a closed system; the touch-control signal is acquired by detecting the specific frequency or change in touch-control signal current with other specific features to prevent other signals or other environmental materials from interfering touch-control detection.

## Description

### BACKGROUND OF THE INVENTION

### Field of Invention

The present invention relates to a touch screen, and more particularly to a capacitive touch screen.

### Related Art

Touch is the most important sensory perception of human beings, and is the most natural way in human-machine interaction. The touch screen thus emerges and has already been widely applied in personal computers, smart phones, public information, intelligent household appliances, industrial control, and other fields. In the current touch field, the resistive touch screen, photoelectric touch screen, ultrasonic touch screen, and planar capacitive touch screen are mainly developed, and in recently years, the projected capacitive touch screen is developed rapidly.

So far, the resistive touch screen is still the mainstream product in the market. However, due to the double-layer substrate structure of the resistive touch screen, when the touch screen and the display panel are laminated in use, the reflection of the touch screen may greatly affect the display performance such as brightness, contrast, and chroma, thus greatly degrading the display quality, and the increase of the backlight brightness of the display panel may cause higher power consumption. The analog resistive touch screen has the problem of positioning drift, and needs calibration from time to time. In addition, the electrode contact working mode of the resistive touch screen also reduces the service life of the touch screen.

The display quality of the infrared touch screen and the ultrasonic touch screen is not affected. However, the cost of the infrared touch screen and the ultrasonic touch screen is high, and the water drop and dust may impair the working reliability of the touch screen. Particularly, due to their complicated structures and high power consumption, the infrared touch screen and the ultrasonic touch screen generally cannot be applied in portable products.

The planar capacitive touch screen has a single-layer substrate structure, and thus when the touch screen and the display panel are laminated in use, the touch screen only has a small impact on the display quality. However, the planar capacitive touch screen also has the problem of positioning drift, and needs to calibration from time to time. The water drop may also impair the working reliability of the touch screen. Particularly, due to its high power consumption and cost, the planar capacitive touch screen generally cannot be applied in portable products.

The projected capacitive touch screen may also have a single-layer substrate structure, and thus when the touch screen and the display panel are laminated in use, the touch screen only has a small impact on the display quality. However, the projected capacitive touch screen detects the position of the finger or other touch objects on the touch screen by measuring the influence of the finger or other touch objects on the coupling capacitance between the electrodes of the touch screen, that is, by measuring the influence of the finger or other touch objects on the charging/discharging of the electrodes of the touch screen. The locating point is obtained through analog computation, and thus the projected capacitive touch screen is not a real digital touch screen. The distributed capacitance in the manufacturing and use environment may affect the working reliability of the touch screen, and the interference of the display driving signal and other electrical signals may influence the working of the touch screen, and the water drop may also impair the working reliability of the touch screen. In addition, the projected capacitive touch screen has a high requirement for the resistance of the detecting line, such that the detecting line of the projected capacitive touch screen laminated with the display panel in use needs to have not only a low electrical conductivity transparent electrode layer like ITO, but also a high electrical conductivity electrode layer like metal. Therefore, the manufacturing process is complicated, and the cost is high, especially for the large-sized and even ultra large-sized touch screens.

When a current capacitive touch screen, no matter being a planar capacitive touch screen or a projected capacitive touch screen, is laminated with a display screen in use, if no shielding layer is disposed between the display screen and the touch screen, a display signal or display state on the display screen may interfere with the touch signal through a coupling capacitance between the display screen and the touch screen, and further affect the working reliability of the touch screen. If a shielding layer is disposed between the display screen and the touch screen, the shielding layer may reduce the transmittance of the touch screen thus affecting the display quality, and also increase the cost; while if no shielding layer is disposed between the display screen and the touch screen, and the display interference is eliminated through computation and discrimination and determination software, a large consumption of computing resources is also caused, the detecting speed is lowered down, and the cost is increased.

Another disadvantage of the capacitive touch screen is that, the touch screen can only be operated by a finger as a touch object. When an operator touches while wearing a glove, the capacitive touch screen responds very slowly, and may even fail to work normally. Besides, the touch screen cannot be operated with a normal non-metal touch pen.

In addition, the capacitive touch screen also has poor waterproof property. The water drop or even water vapor on the touch screen may cause the dielectric coefficient of the ambient environment of the capacitive touch screen to change, which will affect the reliability of the capacitive touch screen.

### SUMMARY OF THE INVENTION

Accordingly, the present invention is directed to a technical solution, so that the capacitive touch screen can not only eliminate the interference of the display to the touch detection, but also be operated smoothly by the operator while wearing a glove; can not only eliminate the interference of the display to the touch detection, but also work normally in an environment that is damp or has water drops; and achieves a high definition.

The basic technical scheme of the present invention is that, return-loop electrodes of touch signals are established on a capacitive touch screen or a product where the capacitive touch screen is applied, and touch detection electrodes for detecting changes of the touch signals and the touch return-loop electrodes are respectively connected to different output ends of a touch excitation source, so that a closed touch loop is formed by the touch excitation source, the touch detection electrodes, the touch return-loop electrodes, and coupling capacitances between the touch detection electrodes and the touch return-loop electrodes, and the touch signals flowing into the touch detection electrodes from the touch excitation source again flows back to the touch excitation source from the touch return-loop electrodes. Then, the touch system is isolated from other systems, to prevent signal cross-talk between different systems, and enable the touch signals to flow in the closed system. Touch information is acquired by detecting the change of the current in the touch signals having specific frequencies or other specific characteristics, so as to prevent other signals or other environmental substances from interfering with the touch detection.

The basic working principle of the present invention is that, two intersecting sensing line groups are respectively disposed on different layers of a touch panel and isolated with an insulating layer, and a touch system circuit has a touch excitation source and a touch signal detection unit; two adjacent sensing lines on the touch screen are respectively in communication with two different output ends of the touch excitation source, one serving as a touch detection electrode, and the other serving as a touch return-loop electrode. Touch signals flowing out of one output end of the touch excitation source flow into the sensing lines connected thereto through a touch sampling element, then flow into the sensing lines at different output ends of the touch excitation source in communication with the touch detection electrode through coupling capacitances between the different sensing lines, and flow back to the touch excitation source from the different output ends of the touch excitation source in communication with the detected sensing line, so that the touch signals flow in a closed touch loop. When a finger or some other touch object approaches or contacts two sensing lines in communication with different output ends of the touch excitation source, the finger or the other touch object changes a coupling capacitance between the two different sensing lines, and the change of the coupling capacitance causes the current of the touch signals in the touch loop to change accordingly. The touch system circuit enables the two adjacent sensing lines on the touch screen to be sequentially in communication with the two different output ends of the touch excitation source in a scanning manner, and meanwhile, the touch signal detection unit detects the change of the current in the touch signals at the output ends, so as to find the sensing line with a maximum current change of the touch signals or with a current change of the touch signals exceeding a threshold, thereby determining a position of the finger or the other touch object on the touch panel.

As the touch signals flow in the closed loop formed between the touch system circuit and the different sensing lines on the touch panel, when a non-metal touch object having a dielectric coefficient different from that of the air approaches or contacts the touch screen, the coupling capacitance between the different sensing lines also changes, and causes the current of the touch signals in the touch loop to change, so that a common non-metal touch pen can be used to operate the capacitive touch screen; while when a metal touch object approaches or contacts the touch screen, the metal touch object changes an effective coupling distance of electrodes for the coupling capacitance between the different sensing lines, and thus changes the coupling capacitance between the sensing lines, causing the current of the touch signals in the loop to change accordingly, so that the metal touch object can also be used to operate the capacitive touch screen.

As the touch signals flow in the closed loop formed between the touch system circuit and the different sensing lines on the touch panel, the touch object changes the coupling capacitance between the different sensing lines, and causes the current of the touch signals in the touch loop to change. That is, as long as properties and parameters of the devices in the loop are changed, the current of the touch signals in the touch loop will change accordingly, and the touch signal detection unit is enabled to acquire touch information with no need to leading a leakage current away from the sensing lines on the touch screen. In this manner, the touch system (including the touch panel and the touch system circuit) is isolated from a display system (including a display screen, a backlight source, and a driving circuit thereof) and isolated from a host circuit; particularly, a touch system circuit power supply is isolated from a display circuit power supply when the touch screen and the display screen are laminated in use and is isolated from a host power supply. Here, the isolation effect is achieved by disposing an isolator between the touch system circuit and the host as well as between the touch system circuit and the display circuit, so that the touch signals cannot flow smoothly between the two circuits. Thereby, when the touch screen is laminated with the display screen in use, the touch signals cannot flow into the display circuit or the host circuit from the touch screen and the touch system circuit, nor flow back to the touch system circuit, so as to prevent the coupling of the touch screen and the touch system circuit with the display circuit as well as the coupling of the touch screen and the touch system circuit with the host circuit from interfering with the touch detection.

The touch signal loop on the touch screen has the following effects. Only when the touch object contacts the touch detection electrode and the touch return-loop electrode simultaneously, the current of the touch signals in the touch loop will change, thus reducing the cross-talk and flowing of the touch signals between the sensing lines on the touch screen; and touch excitation signals can be applied to multiple electrode lines simultaneously, to further reduce the cross-talk and flowing of the touch signals, thereby enhancing the accuracy of the determination of the touched electrode, and achieving a spatially digitalized capacitive touch screen. The sensing lines are made fine enough, and the touch loop on the touch screen appears quite small in space, so as to achieve a high-precision capacitive touch screen. The touched electrode line is determined by detecting relative values of variances of the touch signals on the electrode lines, so as to lower the requirement for the resistance of the electrode lines, and achieve a large-sized or even an ultra large-sized capacitive touch screen.

When water drops fall on the surface of the touch screen, since the dielectric coefficient of the water is much larger than that of the air, the coupling capacitance between the sensing lines with the water drop falling thereon changes, and causes the magnitude of the current in the touch signals to change accordingly; as a result, the touch system circuit makes a false determination that the operator touches the screen. To avoid such a false determination, an electrode is disposed on a housing of a hand-held product where the capacitive touch screen is applied, and the electrode on the housing is selected as a touch return-loop electrode. When the operator holds the application product, with his/her palm contacting the housing of the product and a finger approaching or contacting the touch screen, a coupling capacitance is formed between the finger and the sensing line, and the touch excitation signals on the electrode line flow into the finger through the coupling capacitance, then flow into the touch return-loop electrode on the housing of the application product through the palm that holds the application product, and flow back to the touch excitation source from the touch return-loop electrode, so that the touch signals flow in a closed loop. The water drop on the surface of the touch screen may not cause connection between the sensing line and the touch return-loop electrode on the housing of the application product, and thus a closed loop may not be formed between the touch excitation source, the touch detection electrode, and the touch return-loop electrode, so that the determination of the touch signals by the touch system circuit may not be affected.

The following technical solutions are provided to solve the technical problems of the present invention.

A capacitive touch screen includes a touch substrate and a touch system circuit, the touch system circuit has a touch excitation source and a touch signal detection unit, and sensing line groups are disposed on the touch substrate. When at least two groups of sensing lines are disposed on the touch substrate, each group of sensing lines are disposed on different touch substrates or disposed on the same touch substrate while being isolated with an insulating layer. The touch substrate is disposed on a product where the capacitive touch screen is applied, and the application product has a display system (including a display screen and a driving circuit thereof, and a backlight source and a driving circuit thereof). A first output end of the touch excitation source is used for applying touch signals to the connected electrode lines for at least some moments in a detection period. The touch signal detection unit is used for selecting at least a part of the electrode lines as touch detection electrodes for at least some moments in the detection period, so as to detect whether the part of the electrode lines are touched or not. The touch detection electrodes are electrodes capable of detecting changes of the touch signals flowing there-through when applied with the touch signals. The touch system circuit also selects a part of the electrode lines on the touch substrate as touch return-loop electrodes when selecting the part of the electrodes as the detecting lines. The touch return-loop electrodes are sensing lines, when the touch signals are applied to the touch detection electrodes and the changes of the touch signals flowing there-through are detected, in communication with a second output end of the touch excitation source or another touch excitation source for providing return-loop paths for the touch signals on the detecting lines.

Another solution is provided as follows. A capacitive touch screen includes a touch substrate and a touch system circuit. The touch system circuit has a touch excitation source and a touch signal detection unit, and sensing line groups are disposed on the touch substrate. When at least two groups of sensing lines are disposed on the touch substrate, each group of sensing lines are disposed on different touch substrates or disposed on the same touch substrate while being isolated with an insulating layer. The touch substrate is disposed on a product where the capacitive touch screen is applied, and the application product has a display system (including a display screen and a driving circuit thereof, and a backlight source and a driving circuit thereof). A first output end of the touch excitation source is used for applying touch signals to the connected electrode lines for at least some moments in a detection period. The touch signal detection unit is used for selecting at least a part of the electrode lines as touch detection electrodes for at least some moments in the detection period, so as to detect whether the part of the electrode lines are touched or not. The touch detection electrodes are electrodes capable of detecting changes of the touch signals flowing there-through when applied with the touch signals. Electrodes are disposed on a housing of the application product, and the touch system circuit selects the electrodes disposed on the housing of the application product as touch return-loop electrodes. The touch return-loop electrodes are sensing lines, when the touch signals are applied to the touch detection electrodes and the changes of the touch signals flowing there-through are detected, in communication with a second output end of the touch excitation source or another touch excitation source for providing return-loop paths for the touch signals on the detecting lines.

The following technical solutions are further provided to solve the technical problems of the present invention.

In a specific implementation of the present invention, the touch return-loop electrodes are a part or all of the electrode lines not intersecting the touch detection electrodes, or a part or all of the electrode lines intersecting the touch detection electrodes, or a part or all of the electrode lines intersecting and not intersecting the touch detection electrodes.

In a specific implementation of the present invention, the touch return-loop electrodes not intersecting the touch detection electrodes are electrode lines adjacent to the touch detection electrodes on one or both sides thereof.

In a specific implementation of the present invention, the touch substrate is a flexible or rigid transparent substrate.

In a specific implementation of the present invention, the touch substrate shares the same substrate with a flat panel display screen.

In a specific implementation of the present invention, the sensing lines are display screen electrodes.

In a specific implementation of the present invention, the electrode lines connected to the touch system circuit on the touch substrate are disposed on a touch surface or a non-touch surface of the touch substrate.

In a specific implementation of the present invention, the touch substrate is not only disposed with the electrode lines connected to the touch system circuit, but also disposed with the electrode lines not connected to the touch system circuit.

In a specific implementation of the present invention, the touch system circuit performs touch detection on multiple touch detection electrodes on the touch substrate simultaneously.

In a specific implementation of the present invention, the multiple touch detection electrodes on the touch substrate are detected in parallel.

In a specific implementation of the present invention, the multiple touch detection electrodes on the touch substrate are detected separately.

In a specific implementation of the present invention, the multiple separately detected touch detection electrodes are in communication with different output ends of the touch excitation source.

In a specific implementation of the present invention, the touch signals at different output ends of the same touch excitation source or at output ends of different touch excitation sources in communication with the touch detection electrodes and the touch return-loop electrodes are different.

In a specific implementation of the present invention, the difference between the touch signals lies in at least one of amplitude, phase, and frequency of the touch signals.

In a specific implementation of the present invention, at least one of the different output ends of the same touch excitation source or the output ends of the different touch excitation sources in communication with the different electrode lines is in communication with a grounding terminal of the touch system circuit.

In a specific implementation of the present invention, a signal isolator is disposed between a host circuit and a display system of the touch system circuit and the application product, or between a host circuit power supply and a display system power supply of a touch system circuit power supply and the application product, or between a host circuit power supply and a display system power supply of the touch excitation source of the touch system circuit and the application product; and the signal isolator is a high resistor of the touch signals.

In a specific implementation of the present invention, the sensing lines on the touch substrate are a group of non-intersecting electrode lines, the touch system circuit determines a touched electrode by comparing magnitudes of the changes of the touch signals on the different electrode lines, and a position of a touch point on the touched electrode is determined according to the magnitudes of the changes of the touch signals flowing through the touched electrode.

In a specific implementation of the present invention, the sensing lines on the touch substrate are a group of non-intersecting electrode lines, the different electrode lines have leading-out ends in different directions, and the electrode lines having the leading-out ends in different directions are taken as the detecting lines; the touch system circuit determines a touched electrode by comparing magnitudes of the changes of the touch signals on the different sensing lines, and a position of a touch point on the touched electrode is determined according to the magnitudes of the changes of the touch signals on the detecting lines having the leading-out ends in different directions.

In a specific implementation of the present invention, the non-intersecting electrode lines are fold lines.

Compared with the prior art, the present invention has the following beneficial effects.

In the technical solutions of the present invention, the return-loop electrodes of the touch signals are established on the touch screen or the product where the touch screen is applied, the closed loop of the touch signals is formed between the touch system circuit and the sensing lines, and the touch system is isolated from other systems, so as to reduce the signal cross-talk between different systems, and prevent other signals, particularly display signals, from affecting the touch detection.

In the technical solutions of the present invention, the closed loop of the touch signals is formed between the touch system circuit and the sensing lines on the touch screen, and the touch object changes the coupling capacitance between the different electrode lines, so that the operator can work smoothly while wearing a glove, and the non-metal pen and the metal pen can be used to operate the touch screen. The touch signal loop on the touch screen also reduces the cross-talk and flowing of the touch signals between the sensing lines on the touch screen, thus improving the accuracy of the determination of the touched electrode, and achieving a spatially digitalized capacitive touch screen.

In the technical solutions of the present invention, the touch return-loop electrodes are disposed on the housing of the application product, and the closed loop of the touch signals is formed between the touch system circuit, the sensing lines on the touch screen, and the touch return-loop electrodes on the housing, so as to prevent the water drop from affecting the determination of the touch signals by the touch system circuit.

### BRIEF DESCRIPTION OF THE DRAWINGS

FIG. 1 is a schematic view of electrical connection in a first embodiment and a second embodiment of the present invention;
FIG. 2 is a schematic view of electrical connection in a third embodiment of the present invention;
FIG. 3 is a schematic view of electrical connection in a fourth embodiment of the present invention;
FIG. 4 is a schematic view of electrical connection in a fifth embodiment of the present invention;
FIG. 5 is a schematic view of electrical connection in a sixth embodiment of the present invention;
FIG. 6 is a schematic view of electrical connection in a seventh embodiment of the present invention;
FIG. 7 is a schematic view of electrical connection in an eighth embodiment of the present invention; and
FIG. 8 is a schematic view of electrical connection in a ninth embodiment of the present invention.

### DETAILED DESCRIPTION OF THE INVENTION

The connection line in the following drawings not only represents a single-line connection relation, but also represents a multi-line connection relation.

### First Embodiment

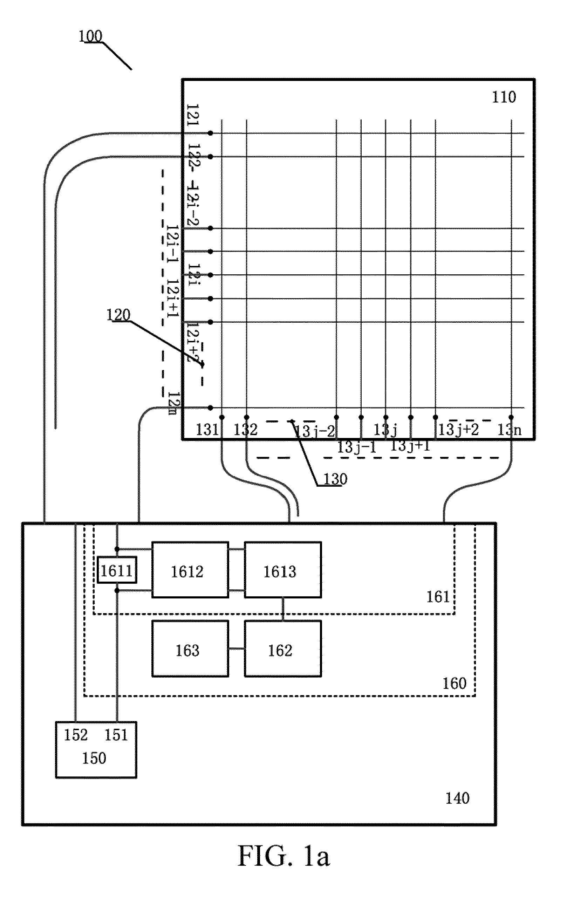

The capacitive touch screen 100 as shown in FIG. 1a includes a touch panel 110 and a touch system circuit 140. A row electrode group 120 (including row electrode lines 121, 122, ..., 12i-2, 12i-1, 12i, 12i+1, 12i+2, ..., 12m) and a column electrode group 130 (including column electrode lines 131, 132, ..., 13j-2, 13j-1, 13j, 13j+1, 13j+2, ..., 13n) arranged orthogonal to each other are disposed on the touch panel 110 and isolated by an insulating layer. The touch system circuit 140 has a touch excitation source 150 and a touch signal detection unit 160. A touch signal frequency of the touch excitation source 150 is selected to be at least 100 KHz. The touch signal detection unit 160 is formed by a signal detection channel 161, a data sampling path 162, and a data processing and timing control unit 163. The signal detection channel 161 has a touch sampling element 1611, a buffer 1612, and a differential amplifier 1613. The data sampling path 162 has an analog-to-digital converter (ADC) circuit. The data processing and timing control unit 163 is a central processor (CPU, MCU) having data computing capability and a data input/output (I/O) interface, and the central processor has control software and data processing software.

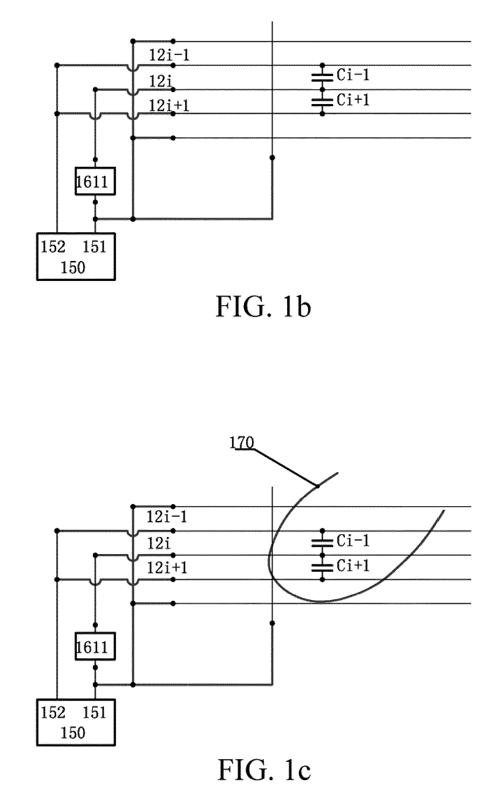

The touch signal detection unit 160 of the touch system circuit 140 selects the electrode line 12i in the row electrode group 120 as a detecting line, the electrode line 12i is in communication with an output end 151 of the touch excitation source 150 through the touch sampling element 1611, and the other circuits in the touch signal detection unit 160 are connected to two ends of the touch sampling element 1611. The electrode lines 12i-1 and 12i+1 in the row electrode group 120 are both in communication with an output end 152 of the touch excitation source 150, and serve as return-loop electrodes of the touch signals. A closed touch loop of the touch signals is formed by a coupling capacitance Cᵢ₋₁ between the electrode line 12i and the electrode line 12i-1, and a coupling capacitance Cᵢ₊₁ between the electrode line 12i and the electrode line 12i+1. The rest of the row electrode lines in the row electrode group 120 and all the column electrode lines in the column electrode group 130 are all in communication with the output end 151 of the touch excitation source 150. The touch signals flowing out of the output end 151 of the touch excitation source 150 flow into the row electrode line 12i through the touch sampling element 1611, flow into the electrode line 12i-1 through the coupling capacitance Cᵢ₋₁ between the electrode line 12i and the electrode line 12i-1, and flow into the electrode line 12i+1 through the coupling capacitance Cᵢ₊₁ between the electrode line 12i and the electrode line 12i+1, and then flow back to the output end 152 of the touch excitation source 150 from the electrode lines 12i-1 and 12i+1, so that the touch signals flow in the closed touch loop, an equivalent circuit of which is shown in FIG. 1b.

When a human finger serving as a touch object 170 approaches or contacts the row electrode line 12i, since the finger has a certain width, the finger may contact the row electrode lines 12i-1 and 12i+1 at the same time. The dielectric coefficient of the human body is much larger than that of the air, so that the values of the coupling capacitances Cᵢ₋₁ and Cᵢ₊₁ are increased and the reactances thereof are decreased, and the current of the touch signals in the touch loop is increased accordingly, an equivalent circuit of which is shown in FIG. 1c. When the finger approaches or contacts positions of the row electrode lines other than 12i, 12i-1, and 12i+1, although the coupling capacitances between the row electrode lines and the coupling capacitances between the row electrode lines and the column electrode lines will change, since the output ends of the touch excitation source 150 in communication with the electrodes at the touched position are the same output end 151, the change of the current in the touch signals flowing through the touch sampling element 1611 is very small.

The touch system circuit 140 enables the electrode lines on the touch screen 100 to be sequentially in communication with the output end 151 of the touch excitation source 150 through the touch sampling element 1611 in a scanning manner, enables the adjacent sensing lines on both sides thereof to be in communication with the output end 152 of the touch excitation source 150 at the same time, and also enables the rest of the electrode lines to be in communication with the output end 151 of the touch excitation source 150. Meanwhile, the touch signal detection unit 160 detects the change of the current in the touch signals flowing through the touch sampling element 1611, so as to find the sensing line with a maximum current change of the touch signals or with a current change of the touch signals exceeding a threshold as a touched electrode line. A cross position of the touched electrode line in the row electrode group 120 and the touched electrode line in the column electrode group 130 is determined as a touch position of the finger.

Regarding the condition for determining the touched electrode line, the electrode line where it is detected that the variance of the touch signals flowing there-through exceeds a preset threshold is determined as a touched electrode line, and the capacitive touch screen 100 supports multi-point touch.

Since the touch signals flow in the closed loop formed between the touch system circuit 140 and the different sensing lines on the touch panel 110, a non-metal object, having a dielectric coefficient different from that of the air, as the touch object 170 approaches or contacts the touch screen 100, the coupling capacitances Cᵢ₋₁ and Cᵢ₊₁ between the adjacent sensing lines may also change to cause the current of the touch signals in the touch loop to change accordingly, such that a non-metal touch object (for example, a common touch pen) can be used to operate the capacitive touch screen 100; while when a metal object as the touch object 170 approaches or contacts the touch screen 100, the metal object changes an effective coupling distance between the adjacent sensing lines, so as to change the coupling capacitances Cᵢ₋₁ and Cᵢ₊₁ between the sensing lines, thus causing the current of the touch signals in the touch loop to change accordingly, such that a metal touch object (for example, a metal touch pen) can also be used to operate the capacitive touch screen 100.

Alternatively, in a detection period, the row electrode line 12i in the row electrode group 120 is in communication with the output end 151 of the touch excitation source 150 through the touch sampling element 1611, and the other circuits in the touch signal detection unit 160 are connected to the two ends of the touch sampling element 1611; the rest of the row electrode lines (including the row electrode lines 12i-1 and 12i+1) in the row electrode group 120 are all in communication with the output end 152 of the touch excitation source 150, to serve as return-loop electrodes of the touch signals; and all the column electrode lines in the column electrode group 130 are directly in communication with the output end 151 of the touch excitation source 150. When the touch object 170 approaches or contacts the row electrode line 12i, the coupling capacitances Cᵢ₋₁ and Cᵢ₊₁ may also change, and the touched electrode line can be found by detecting the change of the current in the touch signals flowing through the touch sampling element 1611.

Alternatively, in a detection period, the row electrode line 12i in the row electrode group 120 is in communication with the output end 151 of the touch excitation source 150 through the touch sampling element 1611, and the other circuits in the touch signal detection unit 160 are connected to the two ends of the touch sampling element 1611; the rest of the row electrode lines (including the row electrode lines 12i-1 and 12i+1) in the row electrode group 120 are all in communication with the output end 152 of the touch excitation source 150; and all the column electrode lines in the column electrode group 130 are in communication with the output end 152 of the touch excitation source 150. When the touch object 170 approaches or contacts the row electrode line 12i, the coupling capacitances Cᵢ₋₁ and Cᵢ₊₁ may also change, and the touched electrode line can be found by detecting the change of the current in the touch signals flowing through the touch sampling element 1611.

Alternatively, in a detection period, the row electrode line 12i is in communication with the output end 151 of the touch excitation source 150 through the touch sampling element 1611, and the other circuits in the touch signal detection unit 160 are connected to the two ends of the touch sampling element 1611; the rest of the row electrode lines in the row electrode group 120 are all in communication with the output end 151 of the touch excitation source 150; and all the column electrode lines in the column electrode group 130 are in communication with the output end 152 of the touch excitation source 150, to serve as the return-loop electrodes of the touch signals. When the touch object 170 approaches or contacts the row electrode line 12i, the coupling capacitance between the row electrode line 12i and the column electrode group 130 may also change, and the touched electrode line can be found by detecting the change of the current in the touch signals flowing through the touch sampling element 1611.

Alternatively, in a detection period, the row electrode line 12i is in communication with the output end 151 of the touch excitation source 150 through the touch sampling element 1611, and the other circuits in the touch signal detection unit 160 are connected to the two ends of the touch sampling element 1611; the rest of the row electrode lines in the row electrode group 120 are all in communication with the output end 151 of the touch excitation source 150, and the electrode lines 131, 132, ..., 13j-1 in the column electrode group 130 are all in communication with the output end 151 of the touch excitation source 150; and the electrode lines 13j, ..., 13n in the column electrode group 130 are all in communication with the output end 152 of the touch excitation source 150, to serve as the return-loop electrodes of the touch signals. When the touch object 170 approaches or contacts a part of the row electrode line 12i located between the column electrode lines 131 to 13j-1, although the coupling capacitance between the electrode line 12i and the electrode line 12i-1 as well as the coupling capacitance between the electrode line 12i and the electrode line 12i+1 changes, and the coupling capacitances between the row electrode line 12i and the column electrode group 130 also change accordingly, since the output ends of the touch excitation source 150 in communication with the electrodes are the same output end 151 at the touched position, the change of the current in the touch signals flowing through the touch sampling element 1611 is very small; while when the touch object 170 approaches or contacts a part of the row electrode line 12i located between the column electrode lines 13j to 13n, the coupling capacitances between the row electrode line 12i and the column electrode group 130 change accordingly, and since the output ends of the touch excitation source 150 in communication with the row electrode line 12i and the column electrode lines 13j, ..., 13n are different at the touched position, the change of the current in the touch signals flowing through the touch sampling element 1611 is very large; and the touched electrode line can be found by detecting the change of the current in the touch signals flowing through the touch sampling element 1611.

### Second Embodiment

The capacitive touch screen 100 as shown in FIG. 1a includes a touch panel 110 and a touch system circuit 140. A row electrode group 120 (including row electrode lines 121, 122, ..., 12i-2, 12i-1, 12i, 12i+1, 12i+2, ..., 12m) and a column electrode group 130 (including column electrode lines 131, 132, ..., 13j-2, 13j-1, 13j, 13j+1, 13j+2, ..., 13n) arranged orthogonal to each other are disposed on the touch panel 110 and isolated by an insulating layer. The touch system circuit 140 has a touch excitation source 150 and a touch signal detection unit 160. A touch signal frequency of the touch excitation source 150 is selected to be at least 100 KHz. The touch signal detection unit 160 is formed by a signal detection channel 161, a data sampling path 162, and a data processing and timing control unit 163. The signal detection channel 161 has a touch sampling element 1611, a buffer 1612, and a differential amplifier 1613. The data sampling path 162 has an ADC circuit. The data processing and timing control unit 163 is a central processor (CPU, MCU) having data computing capability and a data I/O interface, and the central processor has control software and data processing software.

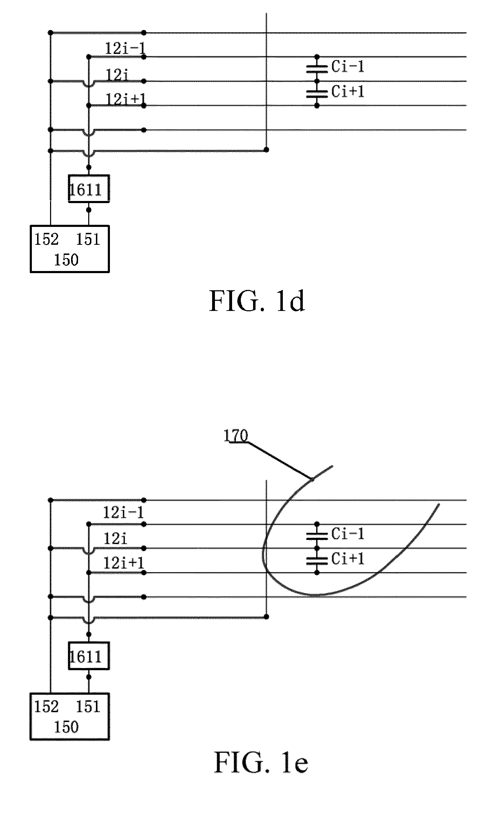

The touch signal detection unit 160 of the touch system circuit 140 enables the electrode line 12i in the row electrode group 120 to be in communication with an output end 152 of the touch excitation source 150, and serve as a return-loop electrode of the touch signals; selects the electrode lines 12i-1 and 12i+1 in the row electrode group 120 as detecting lines, and enables the electrode lines 12i-1 and 12i+1 to be in communication with an output end 151 of the touch excitation source 150 through the touch sampling element 1611; and the other circuits in the touch signal detection unit 160 are connected to the two ends of the touch sampling element 1611. A closed touch loop of the touch signals is formed by a coupling capacitance Cᵢ₋₁ between the electrode line 12i-1 and the electrode line 12i, and a coupling capacitance Cᵢ₊₁ between the electrode line 12i+1 and the electrode line 12i. The rest of the row electrode lines in the row electrode group 120 and all the column electrode lines in the column electrode group 130 are all directly in communication with the output end 152 of the touch excitation source 150. The touch signals flowing into the row electrode lines 12i-1 and 12i+1 1 from the output end 151 of the touch excitation source 150 through the touch sampling element 1611 partially flow into the electrode line 12i through the coupling capacitance Cᵢ₋₁ between the electrode line 12i-1 and the electrode line 12i, also flow into the electrode line 12i through the coupling capacitance Cᵢ₊₁ between the electrode line 12i+1 and the electrode line 12i, and then flow back to the output end 152 of the touch excitation source 150 from the electrode line 12i; and partially flow into the column electrode lines through the coupling capacitances between the row electrode line 12i-1 and the column electrode lines as well as the coupling capacitances between the row electrode line 12i+1 and the column electrode lines, and then flow back to the output end 152 of the touch excitation source 150 from the column electrode lines, so that the touch signals flow in the closed touch loop, an equivalent circuit of which is shown in FIG. 1d.

When a human finger serving as a touch object 170 approaches or contacts the row electrode line 12i, since the finger has a certain width, the finger may contact the row electrode lines 12i-1 and 12i+1 at the same time. The dielectric coefficient of the human body is much larger than that of the air, so that the values of the coupling capacitances Cᵢ₋₁ and Cᵢ₊₁ are increased and the reactances thereof are decreased, and the current of the touch signals in the touch loop is increased accordingly, an equivalent circuit of which is shown in FIG. 1e.

The touch system circuit 140 enables the electrode lines on the touch screen 100 to be sequentially in communication with the output end 151 of the touch excitation source 150 in a scanning manner, enables the adjacent sensing lines on both sides thereof to be in communication with the output end 152 of the touch excitation source 150 through the touch sampling element 1611 at the same time, and also enables the rest of the electrode lines to be in communication with the output end 152 of the touch excitation source 150. Meanwhile, the touch signal detection unit 160 detects the change of the current in the touch signals flowing through the touch sampling element 1611, so as to find the sensing line with a maximum current change of the touch signals or with a current change of the touch signals exceeding a threshold as a touched electrode line. A cross position of the touched electrode line in the row electrode group 120 and the touched electrode line in the column electrode group 130 is determined as a touch position of the finger.

Regarding the condition for determining the touched electrode line, the electrode line where it is detected that the variance of the touch signals flowing there-through exceeds a preset threshold is determined as a touched electrode line, and the capacitive touch screen 100 supports multi-point touch.

Since the touch signals flow in the closed loop formed between the touch system circuit 140 and the different sensing lines on the touch panel 110, a non-metal object, having a dielectric coefficient different from that of the air, as the touch object 170 approaches or contacts the touch screen 100, the coupling capacitances Cᵢ₋₁ and Cᵢ₊₁ between the adjacent sensing lines may also change to cause the current of the touch signals in the touch loop to change accordingly, such that a non-metal touch object (for example, a common touch pen) can be used to operate the capacitive touch screen 100; while when a metal object as the touch object 170 approaches or contacts the touch screen 100, the metal object changes an effective coupling distance between the adjacent sensing lines, so as to change the coupling capacitances Cᵢ₋₁ and Cᵢ₊₁ between the sensing lines, thus causing the current of the touch signals in the touch loop to change accordingly, such that a metal touch object (for example, a metal touch pen) can also be used to operate the capacitive touch screen 100.

Alternatively, in a detection period, the row electrode lines 12i-2, 12i, and 12i+2 in the row electrode group 120 are all in communication with the output end 151 of the touch excitation source 150, to serve as the return-loop electrodes of the touch signals; the row electrode lines 12i-1 and 12i+1 are both in communication with the output end 152 of the touch excitation source 150 through the touch sampling element 1611, and the other circuits in the touch signal detection unit 160 are connected to the two ends of the touch sampling element 1611; and the rest of the row electrode lines in the row electrode group 120 and all the column electrode lines in the column electrode group 130 are all in communication with the output end 152 of the touch excitation source 150. When the touch object 170 approaches or contacts the row electrode line 12i, the coupling capacitance between the electrode line 12i-2 and the electrode line 12i-1, the coupling capacitance between the electrode line 12i-1 and the electrode line 12i, the coupling capacitance between the electrode line 12i and the electrode line 12i+1, and the coupling capacitance between the electrode line 12i+1 and the electrode line 12i+2 may also change, and the touched electrode line can be found by detecting the change of the current in the touch signals flowing through the touch sampling element 1611.

### Third Embodiment

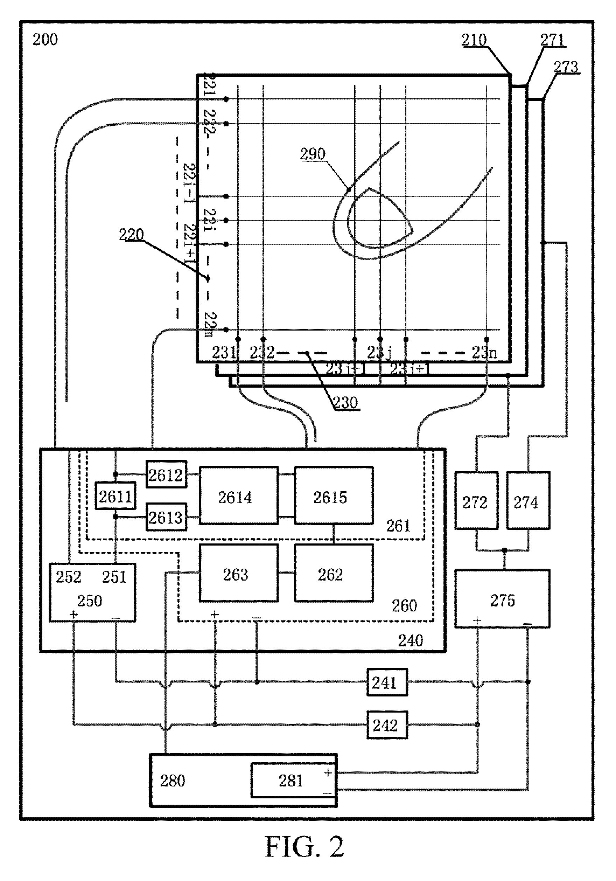

A product 200 where the capacitive touch screen is applied as shown in FIG. 2 includes a transparent touch panel 210, a touch system circuit 240, a display system, and a host circuit 280. A row electrode group 220 (including row electrode lines 221, 222, ..., 22i-1, 22i, 22i+1, ..., 22m) and a column electrode group 230 (including column electrode lines 231, 232, ..., 23j-1, 23j, 23j+1, ..., 23n) arranged orthogonal to each other are disposed on the touch panel 210 and isolated by an insulating layer. The touch system circuit 240 has a touch excitation source 250 and a touch signal detection unit 260. The touch excitation source 250 has output ends 251 and 252, and a touch signal frequency of the touch excitation source 250 is selected to be 100 KHz. The touch signal detection unit 260 is formed by a signal detection channel 261, a data sampling path 262, and a data processing and timing control unit 263. The signal detection channel 261 has a touch sampling element 2611, buffers 2612 and 2613, a signal filter 2614, and a differential amplifier 2615. The signal filter 2614 is capable of preventing signals having frequencies other than 100 KHz to pass through. The data sampling path 262 has an ADC circuit. The data processing and timing control unit 263 is a central processor (CPU, MCU) having data computing capability and a data I/O interface, and the central processor has control software and data processing software. The display system has a display screen 271, a display driving circuit 272, a backlight source 273, a backlight source driving circuit 274, and a display system power supply 275. The transparent touch panel 210 is closely attached to a front side of the display screen 271, and the backlight source 273 is closely attached to a rear side of the display screen 271. The host circuit 280 has a host power supply 281.

The touch signal detection unit 260 of the touch system circuit 240 selects the electrode line 22i in the row electrode group 220 as a detecting line, the electrode line 22i is in communication with the output end 251 of the touch excitation source 250 through the touch sampling element 2611, the buffers 2612 and 2613 of the touch signal detection unit 260 are connected to two ends of the touch sampling element 2611, the signal filter 2614 is connected to the buffers 2612 and 2613, and the differential amplifier 2615 is connected to the signal filter 2614. The electrode lines 22i-1 and 22i+1 in the row electrode group 220 are both in communication with the output end 252 of the touch excitation source 250, to serve as return-loop electrodes of the touch signals. A closed touch loop of the touch signals is formed by a coupling capacitance Cᵢ₋₁ between the electrode line 22i and the electrode line 22i-1, and a coupling capacitance Cᵢ₊₁ between the electrode line 22i and the electrode line 22i+1. The rest of the row electrode lines in the row electrode group 220 and all the column electrode lines in the column electrode group 230 are all directly in communication with the output end 251 of the touch excitation source 250. The host power supply 281 is connected to the display system power supply 275 of the display system, the display system power supply 275 is connected to the display driving circuit 272 and the backlight source driving circuit 274, and the display driving circuit 272 and the backlight source driving circuit 274 are respectively connected to the display screen 271 and the backlight source 273. A power supply end of the touch excitation source 250 and a power supply end of the touch signal detection unit 260 in the touch system circuit 240 are connected to the host power supply 281 through two inductors 241 and 242. The data processing and timing control unit 263 of the touch signal detection unit 260 is connected to the data sampling path 262, and the data sampling path 262 is connected to the signal detection channel 261. The touch sampling element 2611 of the signal detection channel 261 is connected between the touch excitation source 250 and the electrode lines on the touch panel 210, the differential amplifier 2615 in the signal detection channel 261 is connected to the buffers 2612 and 2613 through the signal filter 2614, the buffer 2612 is connected to an end point where the touch sampling element 2611 is connected to the electrode lines on the touch panel 210, and the buffer 2613 is connected to an end point where the touch sampling element 2611 is connected to the touch excitation source 250. The data processing and timing control unit 263 is connected to the host circuit 280 at the same time.

When a human finger 290 approaches or contacts the row electrode line 22i, since the finger 290 has a certain width, the finger 290 may contact the row electrode lines 22i-1 and 22i+1 at the same time. The dielectric coefficient of the human body is much larger than that of the air, so that the values of the coupling capacitances Cᵢ₋₁ and Cᵢ₊₁ are increased and the reactances thereof are decreased, and the current of the touch signals in the touch loop is increased accordingly. The touched electrode line can be found by detecting the change of the current in the touch signals flowing through the touch sampling element 2611.

Since the touch panel 210 is closely attached to the display screen 271, a coupling capacitance C_{TD} also exists between each electrode line on the touch panel 210 and each electrode on the display screen 271. The touch signals output by the touch excitation source 250 to the electrode lines on the touch panel 210 intend to flow into the electrodes on the display screen 271 through the coupling capacitance C_{TD}, then sequentially flow into the display system power supply 275 and the host power supply 281, and flow back to the touch excitation source 250 from the host power supply 281. However, since the inductors 241 and 242 are disposed on the connection lines between the touch system circuit 240 and the host power supply 281, touch signals of high frequencies cannot pass through successfully; and the touch signals cannot form a smooth loop between the touch excitation source 250, the electrode lines on the touch panel 210, and the display screen 271, thus preventing the cross-talk and flowing of the touch signals between the touch system and the display system, and avoiding interference of the coupling capacitance between the touch screen and the display screen on the touch detection. Meanwhile, the signal filter 2614 in the signal detection channel 261 also prevents interfering signals having frequencies other than 100 KHz to pass through, so as to further reduce the impact of the interfering signals on the touch detection.

The touch sampling element 2611 of the signal detection channel 261 is connected between the touch excitation source 250 and the electrode lines on the touch panel 210, the differential amplifier 2615 in the signal detection channel 261 is connected to the buffers 2612 and 2613 through the signal filter 2614, the buffer 2612 is connected to an end point where the touch sampling element 2611 is connected to the electrode lines on the touch panel 210, and the buffer 2613 is connected to an end point where the touch sampling element 2611 is connected to the touch excitation source 250. The end point where the touch sampling element 2611 is connected to the touch excitation source 250 is a signal measurement reference point of the signal detection channel 261, and the signal measurement reference point may also be selected at other positions, that is, the buffer 2613 may be connected to a grounding terminal of the touch system circuit 240, a grounding terminal of the host circuit 280, or an end of a particular comparator circuit, to obtain a preferred measuring effect.

### Fourth Embodiment

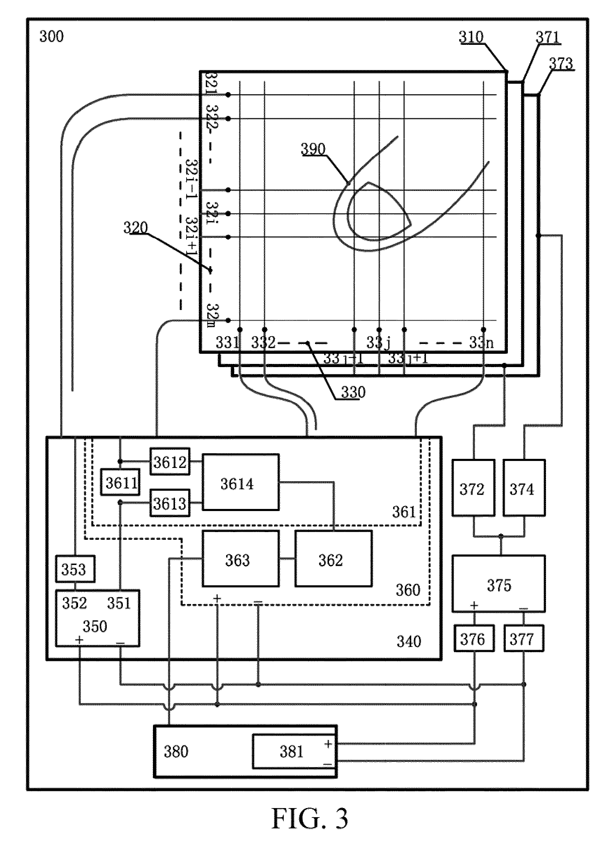

A product 300 where the capacitive touch screen is applied as shown in FIG. 3 includes a transparent touch panel 310, a touch system circuit 340, a display system, and a host circuit 380. A row electrode group 320 (including row electrode lines 321, 322, ..., 32i-1, 32i, 32i+1, ..., 32m) and a column electrode group 330 (including column electrode lines 331, 332, ..., 33j-1, 33j, 33j+1, ..., 33n) arranged orthogonal to each other are disposed on the touch panel 310 and isolated by an insulating layer. The touch system circuit 340 has a touch excitation source 350 and a touch signal detection unit 360. The touch excitation source 350 has output ends 351 and 352, and a touch signal frequency of the touch excitation source 350 is selected to be 400 KHz. A gating-switch filter 353 for signals having a frequency of 400 KHz is disposed at the output end of the touch excitation source 350. The touch signal detection unit 360 is formed by a signal detection channel 361, a data sampling path 362, and a data processing and timing control unit 363. The signal detection channel 361 has a touch sampling element 3611, buffers 3612 and 3613, and a differential amplifier 3614. The data sampling path 362 has an ADC circuit. The data processing and timing control unit 363 is a central processor (CPU, MCU) having data computing capability and a data I/O interface, and the central processor has control software and data processing software. The display system has a display screen 371, a display driving circuit 372, a backlight source 373, a backlight source driving circuit 374, and a display system power supply 375. The transparent touch panel 310 is closely attached to a front side of the display screen 371, and the backlight source 373 is closely attached to a rear side of the display screen 371. The host circuit 380 has a host power supply 381.

The touch signal detection unit 360 of the touch system circuit 340 selects the electrode line 32i in the row electrode group 320 as a detecting line, the electrode line 32i is in communication with the output end 351 of the touch excitation source 350 through the touch sampling element 3611, and the other circuits in the touch signal detection unit 360 are connected to two ends of the touch sampling element 3611. The electrode lines 32i-1 and 32i+1 in the row electrode group 320 are both in communication with the output end 352 of the touch excitation source 350 through the gating-switch filter 353, to serve as return-loop electrodes of the touch signals. A closed touch loop of the touch signals is formed by a coupling capacitance Cᵢ₋₁ between the electrode line 32i and the electrode line 32i-1, and a coupling capacitance Cᵢ₊₁ between the electrode line 32i and the electrode line 32i+1. The rest of the row electrode lines in the row electrode group 320 and all the column electrode lines in the column electrode group 330 are all directly in communication with the output end 351 of the touch excitation source 350. The display system power supply 375 of the display system is connected to the host power supply 381 through two inductors 376 and 377, the display system power supply 375 is connected to the display driving circuit 372 and the backlight source driving circuit 374, and the display driving circuit 372 and the backlight source driving circuit 374 are respectively connected to the display screen 371 and the backlight source 373. The host power supply 381 is connected to a power supply end of the touch excitation source 350 and a power supply end of the touch signal detection unit 360 in the touch system circuit 340. The data processing and timing control unit 363 of the touch signal detection unit 360 is connected to the data sampling path 362, and the data sampling path 362 is connected to the signal detection channel 361. The differential amplifier 3614 in the signal detection channel 361 is connected to the buffers 3612 and 3613, the buffers 3612 and 3613 are connected to the two ends of the touch sampling element 3611, and the touch sampling element 3611 of the signal detection channel 361 is connected between the touch excitation source 350 and the electrode lines on the touch panel 310. The data processing and timing control unit 363 is connected to the host circuit 380 at the same time.

When a human finger 390 approaches or contacts the row electrode line 32i, since the finger 390 has a certain width, the finger 390 may contact the row electrode lines 32i-1 and 32i+1 at the same time. The dielectric coefficient of the human body is much larger than that of the air, so that the values of the coupling capacitances Cᵢ₋₁ and Cᵢ₊₁ are increased and the reactances thereof are decreased, and the current of the touch signals in the touch loop is increased accordingly. The touched electrode line can be found by detecting the change of the current in the touch signals flowing through the touch sampling element 3611.

Since the touch panel 310 is closely attached to the display screen 371, a coupling capacitance C_{TD} also exists between each electrode line on the touch panel 310 and each electrode on the display screen 371. The touch signals output by the touch excitation source 350 to the electrode lines on the touch panel 310 intend to flow into the electrodes on the display screen 371 through the coupling capacitance C_{TD}, then sequentially flow into the display system power supply 375 and the host power supply 381, and flow back to the touch excitation source 350 from the host power supply 381. However, since the inductors 376 and 377 are disposed on the connection lines between the display system power supply 375 and the host power supply 381, touch signals of high frequencies cannot pass through successfully; and the touch signals cannot form a smooth loop between the touch excitation source 350, the electrode lines on the touch panel 310, and the display screen 371, thus preventing the cross-talk and flowing of the touch signals between the touch system and the display system, and avoiding interference of the coupling capacitance between the touch screen and the display screen on the touch detection. Meanwhile, the gating-switch filter 353 in the touch loop also prevents interfering signals having frequencies other than 400 KHz to pass through, so as to further reduce the impact of the interfering signals on the touch detection.

### Fifth Embodiment

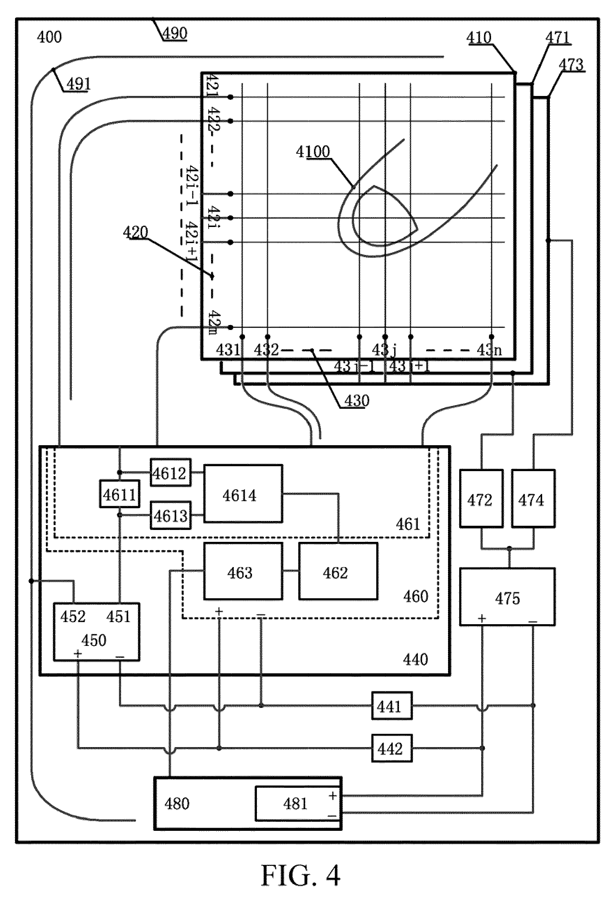

A hand-held product 400 where the capacitive touch screen is applied as shown in FIG. 4 includes a transparent touch panel 410, a touch system circuit 440, a display system, a host circuit 480, and a housing 490. A row electrode group 420 (including row electrode lines 421, 422, ..., 42i-1, 42i, 42i+1, ..., 42m) and a column electrode group 430 (including column electrode lines 431, 432, ..., 43j-1, 43j, 43j+1, ..., 43n) arranged orthogonal to each other are disposed on the touch panel 410 and isolated by an insulating layer. The touch system circuit 440 has a touch excitation source 450 and a touch signal detection unit 460. A touch signal frequency of the touch excitation source 450 is selected to be at least 100 KHz. The touch signal detection unit 460 is formed by a signal detection channel 461, a data sampling path 462, and a data processing and timing control unit 463. The signal detection channel 461 has a touch sampling element 4611, buffers 4612 and 4613, and a differential amplifier 4614. The data sampling path 462 has an ADC circuit. The data processing and timing control unit 463 is a central processor (CPU, MCU) having data computing capability and a data I/O interface, and the central processor has control software and data processing software. The display system has a display screen 471, a display driving circuit 472, a backlight source 473, a backlight source driving circuit 474, and a display system power supply 475. The transparent touch panel 410 is closely attached to a front side of the display screen 471, and the backlight source 473 is closely attached to a rear side of the display screen 471. The host circuit 480 has a host power supply 481. An electrode 491 is disposed on the housing 490.

The host power supply 481 is connected to the display system power supply 475 of the display system 470, the display system power supply 475 is connected to the display driving circuit 472 and the backlight source driving circuit 474, and the display driving circuit 472 and the backlight source driving circuit 474 are respectively connected to the display screen 471 and the backlight source 473. A power supply end of the touch excitation source 450 and a power supply end of the touch signal detection unit 460 in the touch system circuit 440 are connected to the host power supply 481 through two inductors 441 and 442. The data processing and timing control unit 463 of the touch signal detection unit 460 is connected to the data sampling path 462, and the data sampling path 462 is connected to the signal detection channel 461. The differential amplifier 4614 in the signal detection channel 461 is connected to the buffers 4612 and 4613, the buffers 4612 and 4613 are connected to two ends of the touch sampling element 4611, and the touch sampling element 4611 of the signal detection channel 461 is connected between the touch excitation source 450 and the electrode lines on the touch panel 410. The data processing and timing control unit 463 is connected to the host circuit 480 at the same time.

The touch signal detection unit 460 of the touch system circuit 440 selects the electrode line 42i in the row electrode group 420 as a detecting line, the electrode line 42i is in communication with an output end 451 of the touch excitation source 450 through the touch sampling element 4611, and the other circuits in the touch signal detection unit 460 are connected to the two ends of the touch sampling element 4611. The rest of the row electrode lines in the row electrode group 420 and all the column electrode lines in the column electrode group 430 are all directly in communication with the output end 451 of the touch excitation source 450. The electrode 491 on the housing 490 serves as a return-loop electrode of the touch signals, and the electrode 491 is in communication with an output end 452 of the touch excitation source 450. When a human finger 4100 approaches or contacts the row electrode line 42i, a coupling capacitance Cᵢ is generated between the finger 4100 and the row electrode line 42i, and thus touch excitation signals output by the touch excitation source 450 to the row electrode line 42i flow into the finger through the coupling capacitance Cᵢ, then flow into the return-loop electrode 491 on the housing of the product through the palm that holds the product, and flow back to the touch excitation source 450 from the return-loop electrode 491. A touch loop is formed by the touch excitation source, the electrode lines on the touch panel, the coupling capacitances between the finger and the electrode lines, and the return-loop electrode on the housing. The touched electrode line can be found by detecting the change of the current in the touch signals flowing through the touch sampling element 4611.

Since the touch panel 410 is closely attached to the display screen 471, a coupling capacitance C_{TD} also exists between each electrode line on the touch panel 410 and each electrode on the display screen 471. The touch signals output by the touch excitation source 450 to the electrode lines on the touch panel 410 intend to flow into the electrodes on the display screen 471 through the coupling capacitance C_{TD}, then sequentially flow into the display system power supply 475 and the host power supply 481, and flow back to the touch excitation source 450 from the host power supply 481. However, since the inductors 441 and 442 are disposed on the connection lines between the touch system circuit 440 and the host power supply 481, touch signals of high frequencies cannot pass through successfully; and the touch signals cannot form a smooth loop between the touch excitation source 450, the electrode lines on the touch panel 410, and the display screen 471, thus preventing the cross-talk and flowing of the touch signals between the touch system and the display system, and avoiding interference of the coupling capacitance between the touch screen and the display screen on the touch detection.

When water drops fall on the surface of the touch panel 410, the water drops on the surface of the touch panel 410 may not cause connection between the electrode lines on the touch panel and the electrode 491 on the housing 490 of the product, and thus a touch signal loop cannot be formed between the electrode lines on the touch panel, the water drops on the surface of the touch panel, the electrode on the housing, and the touch excitation source. A touch signal loop can only be formed by the touch excitation source, the electrode lines on the touch panel, the coupling capacitances between the finger and the electrode lines, and the return-loop electrode on the housing when the finger of the operator holding the application product contacts the touch panel. Thereby, the water drops on the surface of the touch panel 410 may not affect the determination of the touch signals by the touch system circuit.

### Sixth Embodiment

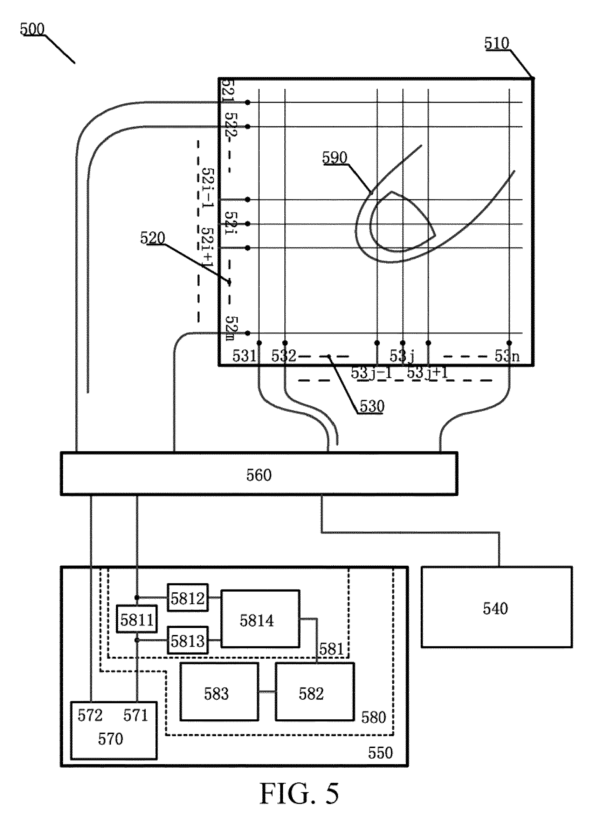

The touch flat panel display 500 as shown in FIG. 5 includes a display screen 510, a display driving circuit 540, a touch system circuit 550, and a display/touch signal gating-switch circuit 560. A row electrode group 520 (including row electrode lines 521, 522, ..., 52i-1, 52i, 52i+1, ..., 52m) and a column electrode group 530 (including column electrode lines 531, 532, ..., 53j-1, 53j, 53j+1, ..., 53n) arranged orthogonal to each other are disposed on the display screen 510 and isolated by an insulating layer. The touch system circuit 550 has a touch excitation source 570 and a touch signal detection unit 580. The touch signal detection unit 580 is formed by a signal detection channel 581, a data sampling path 582, and a data processing and timing control unit 583. The signal detection channel 581 has a touch sampling element 5811, buffers 5812 and 5813, and a differential amplifier 5814. The data sampling path 582 has an ADC circuit. The data processing and timing control unit 583 is a central processor (CPU, MCU) having data computing capability and a data I/O interface, and the central processor has control software and data processing software. The display driving circuit 540 and the touch system circuit 550 are connected to the display screen 510 through the display/touch signal gating-switch circuit 560. The display/touch signal gating-switch circuit 560 enables the display driving circuit 540 to be in communication with the display screen 510, or enables the touch system circuit 550 to be in communication with the display screen 510.

In a display period, the display/touch signal gating-switch circuit 560 enables the display driving circuit 540 to be in communication with the display screen 510, and transmits display driving signals to the display screen 510, so that the display screen 510 is in a display state.

In a detection period, the display/touch signal gating-switch circuit 560 enables the touch system circuit 550 to be in communication with the display screen 510, and transmits the touch signals to the display screen 510, so that the display screen 510 is in a touch detection state. At a certain moment in the detection period, the touch signal detection unit 580 of the touch system circuit 550 selects the electrode line 52i in the row electrode group 520 as a detecting line, the electrode line 52i is in communication with an output end 571 of the touch excitation source 570 through the touch sampling element 5811, and the other circuits in the touch signal detection unit 580 are connected to two ends of the touch sampling element 5811. The electrode lines 52i-1 and 52i+1 in the row electrode group 520 are both in communication with an output end 572 of the touch excitation source 570, to serve as return-loop electrodes of the touch signals. A closed touch loop of the touch signals is formed by a coupling capacitance Cᵢ₋₁ between the electrode line 52i and the electrode line 52i-1, and a coupling capacitance Cᵢ₊₁ between the electrode line 52i and the electrode line 52i+1. The rest of the row electrode lines in the row electrode group 520 and all the column electrode lines in the column electrode group 530 are all in communication with the output end 571 of the touch excitation source 570. The touch signals flowing out of the output end 571 of the touch excitation source 570 flow into the row electrode line 52i through the touch sampling element 5811, flow into the electrode line 52i-1 through the coupling capacitance Cᵢ₋₁ between the electrode line 52i and the electrode line 52i-1, flow into the electrode line 52i+1 through the coupling capacitance Cᵢ₊₁ between the electrode line 52i and the electrode line 52i+1, and then flow back to the output end 572 of the touch excitation source 570 from the electrode lines 52i-1 and 52i+1, so that the touch signals flow in the closed touch loop.

When a human finger serving as a touch object 590 approaches or contacts the row electrode line 52i, since the finger has a certain width, the finger may contact the row electrode lines 52i-1 and 52i+1 at the same time. The dielectric coefficient of the human body is much larger than that of the air, so that the values of the coupling capacitances Cᵢ₋₁ and Cᵢ₊₁ are increased and the reactances thereof are decreased, and the current of the touch signals in the touch loop is increased accordingly. When the finger approaches or contacts positions of the row electrode lines other than 52i, 52i-1, and 52i+1, although the coupling capacitances between the row electrode lines and the coupling capacitances between the row electrode lines and the column electrode lines will change, since the output ends of the touch excitation source 570 in communication with the electrodes at the touched position are the same output end 571, the change of the current in the touch signals flowing through the touch sampling element 5811 is very small.

The touch system circuit 550 enables the electrode lines on the display screen 510 to be sequentially in communication with the output end 571 of the touch excitation source 570 through the touch sampling element 5811 in a scanning manner, enables the adjacent sensing lines on both sides thereof to be in communication with the output end 572 of the touch excitation source 570 at the same time, and also enables the rest of the electrode lines to be in communication with the output end 571 of the touch excitation source 570. Meanwhile, the touch signal detection unit 580 detects the change of the current in the touch signals flowing through the touch sampling element 5811, so as to find the sensing line with a maximum current change of the touch signals or with a current change of the touch signals exceeding a threshold as a touched electrode line. A cross position of the touched electrode line in the row electrode group 520 and the touched electrode line in the column electrode group 530 is determined as a touch position of the finger.

Regarding the condition for determining the touched electrode line, the electrode line where it is detected that the variance of the touch signals flowing there-through exceeds a preset threshold is determined as a touched electrode line, and the touch flat panel display 500 supports multi-point touch.

Since the touch signals flow in the closed loop formed between the touch system circuit 550 and the different sensing lines on the display screen 510, a non-metal object, having a dielectric coefficient different from that of the air, as the touch object 590 approaches or contacts the display screen 510, the coupling capacitances Cᵢ₋₁ and Cᵢ₊₁ between the adjacent sensing lines may also change to cause the current of the touch signals in the touch loop to change accordingly, such that a non-metal touch object (for example, a common touch pen) can be used to operate the touch flat panel display 500; while when a metal object as the touch object 590 approaches or contacts the display screen 510, the metal object changes an effective coupling distance between the adjacent sensing lines, so as to change the coupling capacitances Cᵢ₋₁ and Cᵢ₊₁ between the sensing lines, thus causing the current of the touch signals in the touch loop to change accordingly, such that a metal touch object (for example, a metal touch pen) can also be used to operate the touch flat panel display 500.

### Seventh Embodiment

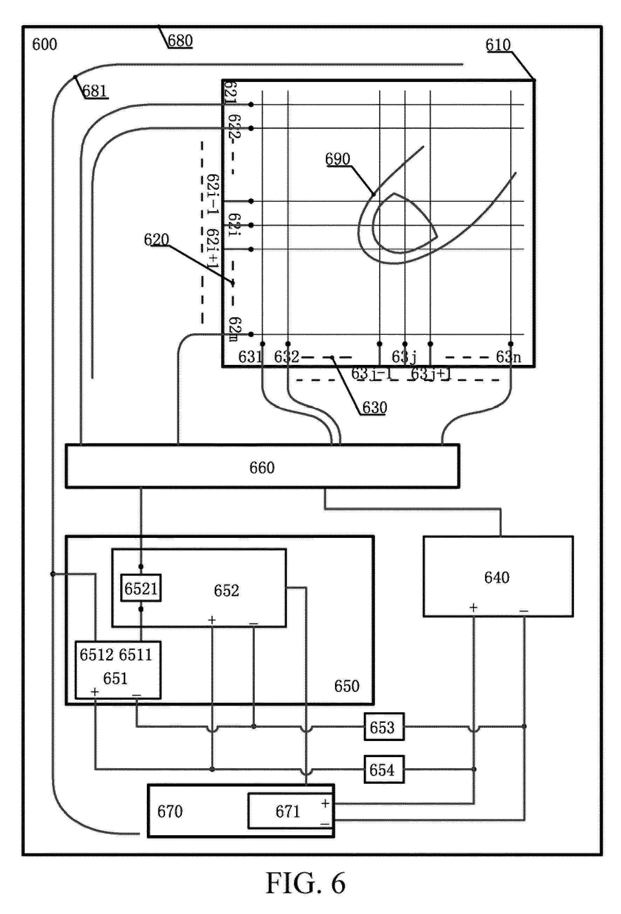

A hand-held product 600 where the touch flat panel display is applied as shown in FIG. 6 includes a display screen 610, a display driving circuit 640, a touch system circuit 650, a display/touch signal gating-switch circuit 660, a host circuit 670, and a housing 680. A row electrode group 620 (including row electrode lines 621, 622, ..., 62i-1, 62i, 62i+1, ..., 62m) and a column electrode group 630 (including column electrode lines 631, 632, ..., 63j-1, 63j, 63j+1, ..., 63n) arranged orthogonal to each other are disposed on the display screen 610 and isolated by an insulating layer. The touch system circuit 650 has a touch excitation source 651 and a touch signal detection unit 652. The touch signal detection unit 652 has a touch sampling element 6521. The host circuit 670 has a host power supply 671. An electrode 681 is disposed on the housing 680. A power supply end of the touch excitation source 651 and a power supply end of the touch signal detection unit 652 in the touch system circuit 650 are connected to the host power supply 671 through two inductors 653 and 654. The display driving circuit 640 and the touch system circuit 650 are connected to the display screen 610 through the display/touch signal gating-switch circuit 660. The display/touch signal gating-switch circuit 660 enables the display driving circuit 640 to be in communication with the display screen 610, or enables the touch system circuit 650 to be in communication with the display screen 610.

In a display period, the display/touch signal gating-switch circuit 660 enables the display driving circuit 640 to be in communication with the display screen 610, and transmits display driving signals to the display screen 610, so that the display screen 610 is in a display state.

In a detection period, the display/touch signal gating-switch circuit 660 enables the touch system circuit 650 to be in communication with the display screen 610, and transmits the touch signals to the display screen 610, so that the display screen 610 is in a touch detection state. At a certain moment in the detection period, the touch signal detection unit 652 of the touch system circuit 640 selects the electrode line 62i in the row electrode group 620 as a detecting line, the electrode line 62i is in communication with an output end 6511 of the touch excitation source 651 through the touch sampling element 6521, and the other circuits in the touch signal detection unit 652 are connected to two ends of the touch sampling element 6521. The rest of the row electrode lines in the row electrode group 620 and all the column electrode lines in the column electrode group 630 are all in communication with the output end 6511 of the touch excitation source 651. The electrode 681 on the housing 680 serves as a return-loop electrode of the touch signals, and the electrode 681 is in communication with an output end 6512 of the touch excitation source 651. When a human finger 690 approaches or contacts the row electrode line 62i, a coupling capacitance Cᵢ is generated between the finger 690 and the row electrode line 62i, and thus touch excitation signals output by the touch excitation source 651 to the row electrode line 62i flow into the finger through the coupling capacitance Cᵢ, then flow into the return-loop electrode 681 on the housing of the product through the palm that holds the product, and flow back to the touch excitation source 651 from the return-loop electrode 681. A touch loop is formed by the touch excitation source, the electrode lines on the touch panel, the coupling capacitances between the finger and the electrode lines, and the return-loop electrode on the housing. The touched electrode line can be found by detecting the change of the current in the touch signals flowing through the touch sampling element 6521.

When water drops fall on the surface of the display screen 610, the water drops on the surface of the display screen 610 may not cause connection between the electrode lines on the display screen and the electrode 681 on the housing 680 of the product, and thus a touch signal loop cannot be formed between the electrode lines on the display screen, the water drops on the surface of the display screen, the electrode on the housing, and the touch excitation source. A touch signal loop can only be formed by the touch excitation source, the electrode lines on the touch panel, the coupling capacitances between the finger and the electrode lines, and the return-loop electrode on the housing when the finger of the operator holding the application product contacts the touch panel. Thereby, the water drops on the surface of the display screen 610 may not affect the determination of the touch signals by the touch system circuit.

### Eighth Embodiment

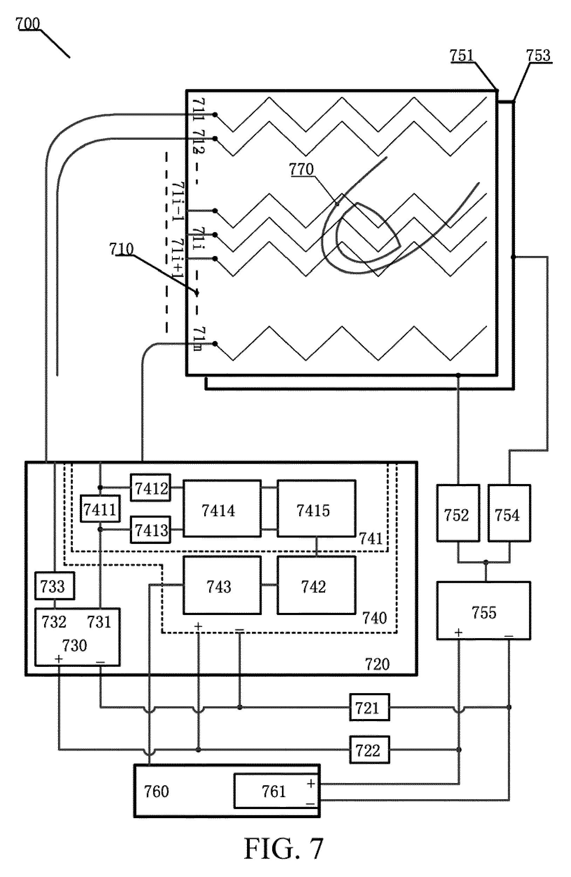

A product 700 where the capacitive touch screen is applied as shown in FIG. 7 includes a sensing line group 710, a touch system circuit 720, a display system, and a host circuit 760. The display system has a display screen 751, a display driving circuit 752, a backlight source 753, a backlight source driving circuit 754, and a display system power supply 755. The backlight source 753 is closely attached to a rear side of the display screen 751. The host circuit 760 has a host power supply 761. A non-intersecting electrode group 710 (including electrode lines 711, 712, ..., 71i-1, 71i, 71i+1, ..., 71m in the form of fold lines) is disposed on an upper surface of a substrate of the display screen 751, leading-out ends of the electrode lines are all located in the same direction of the electrode group 710, and the electrode lines are fabricated by an ITO transparent material having a certain resistance. The touch system circuit 720 has a touch excitation source 730 and a touch signal detection unit 740. The touch excitation source 730 has output ends 731 and 732, a touch signal frequency of the touch excitation source 730 is selected to be 400 KHz, and a gating-switch filter 733 for signals having a frequency of 400 KHz is disposed at the output end 732 of the touch excitation source 730. The touch signal detection unit 740 is formed by a signal detection channel 741, a data sampling path 742, and a data processing and timing control unit 743. The signal detection channel 741 has a touch sampling element 7411, buffers 7412 and 7413, a signal filter 7414, and a differential amplifier 7415. The data sampling path 742 has an ADC circuit. The data processing and timing control unit 743 is a central processor (CPU, MCU) having data computing capability and a data I/O interface, and the central processor has control software and data processing software.

The touch signal detection unit 740 of the touch system circuit 720 selects the electrode line 71i in the electrode group 710 as a detecting line, the electrode line 71i is in communication with the output end 731 of the touch excitation source 730 through the touch sampling element 7411, and the electrode lines 71i-1 and 71i+1 in the electrode group 710 are both in communication with the output end 732 of the touch excitation source 730, to serve as return-loop electrodes of the touch signals. A closed touch loop is formed by a coupling capacitance Cᵢ₋₁ between the electrode line 71i and the electrode line 71i-1, and a coupling capacitance Cᵢ₊₁ between the electrode line 71i and the electrode line 71i+1. The rest of the electrode lines in the electrode group 710 are in communication with the output end 731 of the touch excitation source 730. The host power supply 761 is connected to the display system power supply 755 of the display system, the display system power supply 755 is connected to the display driving circuit 752 and the backlight source driving circuit 754, and the display driving circuit 752 and the backlight source driving circuit 754 are respectively connected to the display screen 751 and the backlight source 753. A power supply end of the touch excitation source 730 and a power supply end of the touch signal detection unit 740 in the touch system circuit 720 are connected to the host power supply 761 through two signal isolators 721 and 722 that prevent the touch signals having a frequency of 400 KHz from passing through successfully. The data processing and timing control unit 743 of the touch signal detection unit 740 is connected to the data sampling path 742, and the data sampling path 742 is connected to the signal detection channel 741. The touch sampling element 7411 of the signal detection channel 741 is connected between the touch excitation source 730 and the electrode lines on the sensing line group 710, the differential amplifier 7415 in the signal detection channel 741 is connected to the buffers 7412 and 7413 through the signal filter 7414, the buffer 7412 is connected to an end point where the touch sampling element 7411 is connected to the electrode lines of the sensing line group 710, and the buffer 7413 is connected to an end point where the touch sampling element 7411 is connected to the touch excitation source 730. The data processing and timing control unit 743 is connected to the host circuit 760 at the same time.

When a human finger 770 approaches or contacts the electrode line 71i, since the finger 770 has a certain width, the finger 770 may contact the electrode lines 71i-1 and 71i+1 at the same time. The dielectric coefficient of the human body is much larger than that of the air, so that the values of the coupling capacitances Cᵢ₋₁ and Cᵢ₊₁ are increased and the reactances thereof are decreased, and the current of the touch signals in the touch loop is increased accordingly. Since the leading-out ends of the detecting line and the return-loop electrodes are located in the same direction of the sensing line group 710, and the electrode line has a certain resistance, when the finger contacts different positions of the electrode line, the line resistance of the electrode line segment from the output end of the touch excitation source to the touch point is different, the resistance on the touch loop is different, and the current of the touch signals changes with the position of the finger 770 on the touched electrode line. The touch system circuit 720 selects each electrode line of the electrode group 710 as the detecting line one by one in a scanning manner, so as to determine a touched electrode by comparing magnitudes of the changes of the touch signals on the different electrode lines, and determine a position of a touch point on the touched electrode according to the magnitudes of the changes of the touch signals flowing through the touched electrode.

Since the sensing line group 710 is located on the substrate of the display screen 751, a coupling capacitance C_{TD} also exists between each electrode line of the sensing line group 710 and each electrode on the display screen 751. The touch signals output by the touch excitation source 730 to the sensing lines intend to flow into the electrodes on the display screen 751 through the coupling capacitance C_{TD}, then sequentially flow into the display system power supply 755 and the host power supply 761, and flow back to the touch excitation source 730 from the host power supply 761. However, since the host power supply 761 is connected to the power supply end of the touch excitation source 730 and the power supply end of the touch signal detection unit 740 through the signal isolators 721 and 722, touch signals having a frequency of 400 KHz cannot pass through successfully, and the touch signals cannot form a smooth loop between the touch excitation source 730, the electrode lines on the sensing line group 710, the display screen 751, the display system power supply 755, and the host power supply 761, thus preventing the cross-talk and flowing of the touch signals between the touch system and the display system, and avoiding interference of the coupling capacitance between the touch screen and the display screen on the touch detection. Meanwhile, the gating-switch filter 733 in the touch loop also prevents interfering signals having frequencies other than 400 KHz to pass through, so as to further reduce the impact of the interfering signals on the touch detection. The signal filter 7414 in the touch signal detection unit 740 also prevents the interfering signals having frequencies other than 400 KHz to affect the touch detection effect.

When multiple touch points exist, the touch points on different electrode lines can be distinguished by comparing the magnitudes of the touch signals on the different electrode lines in adjacent areas; while different touch points on the same electrode line can be distinguished by the sequence of time at which the touch points are touched. When two touch points move in a direction parallel to the electrode group 710, since the electrode lines in the electrode group 710 are fold lines, the movement of the touch point in any direction may pass through different electrode lines at different time, so that the position and moving direction of the touch point can be determined.

### Ninth Embodiment

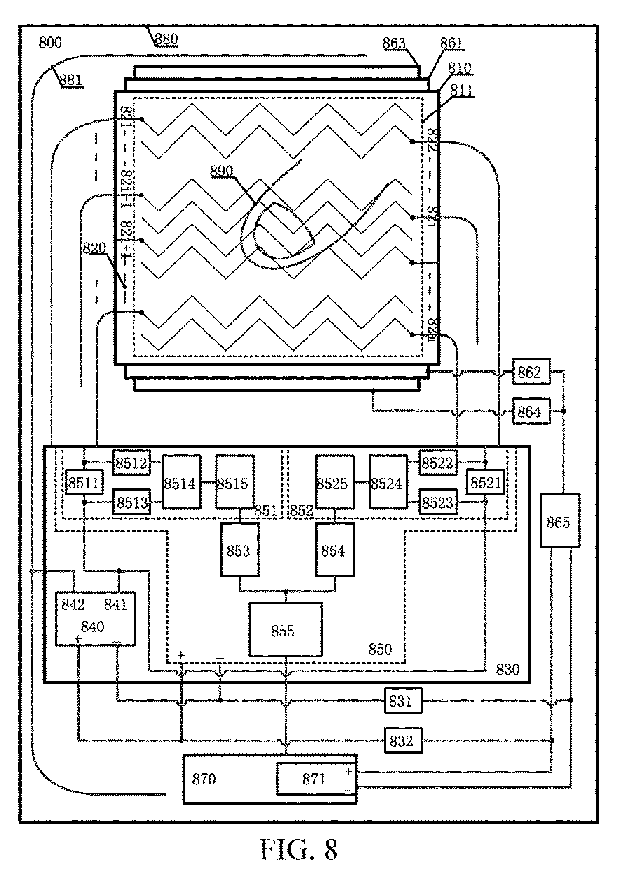

A hand-held product 800 where the capacitive touch screen is applied as shown in FIG. 8 includes a transparent touch panel 810, a touch system circuit 830, a display system, a host circuit 870, and a housing 880. The display system has a display screen 861, a display driving circuit 862, a backlight source 863, a backlight source driving circuit 864, and a display system power supply 865. The transparent touch panel 810 is closely attached to a front side of the display screen 861, and the backlight source 863 is closely attached to a rear side of the display screen 861. The host circuit 870 has a host power supply 871. An electrode 881 is disposed on the housing 880.

A transparent planar electrode 811 is disposed on a surface of the touch panel 810 facing the display screen 861. A non-intersecting electrode group 820 (including electrode lines 821, 822, ..., 82i-1, 82i, 82i+1, ..., 82m in the form of fold lines) is disposed on a surface of the touch panel 810 facing the user, the adjacent electrode lines have leading-out ends in different directions, and the electrode lines are fabricated by an ITO transparent material having a certain resistance. The touch system circuit 830 has a touch excitation source 840 and a touch signal detection unit 850. The touch excitation source 840 has output ends 841 and 842, and a touch signal frequency of the touch excitation source 840 is selected to be 400 KHz. The touch signal detection unit 850 is formed by signal detection channels 851 and 852, data sampling paths 853 and 854, and a data processing and timing control unit 855. The signal detection channel 851 has a touch sampling element 8511, buffers 8512 and 8513, a signal filter 8514, and a differential amplifier 8515. The signal detection channel 852 has a touch sampling element 8521, buffers 8522 and 8523, a signal filter 8524, and a differential amplifier 8525. The data sampling path 853 has an ADC circuit, and the data sampling path 854 has an ADC circuit. The data processing and timing control unit 855 is a central processor (CPU, MCU) having data computing capability and a data I/O interface, and the central processor has control software and data processing software.

The touch signal detection unit 850 of the touch system circuit 830 selects the electrode lines 82i-1 and 82i in the electrode group 820 as detecting lines, the electrode line 82i-1 is in communication with the output end 841 of the touch excitation source 840 through the touch sampling element 8511, the electrode line 82i is in communication with the output end 841 of the touch excitation source 840 through the touch sampling element 8512, and the rest of the electrode lines in the electrode group 820 are all directly in communication with the output end 841 of the touch excitation source 840. The electrode 881 on the housing 880 serves as a return-loop electrode of the touch signals, and the electrode 881 is in communication with the output end 842 of the touch excitation source 840. The host power supply 871 is connected to the display system power supply 865 of the display system, the display system power supply 865 is connected to the display driving circuit 862 and the backlight source driving circuit 864, and the display driving circuit 862 and the backlight source driving circuit 864 are respectively connected to the display screen 861 and the backlight source 863. A power supply end of the touch excitation source 840 and a power supply end of the touch signal detection unit 850 in the touch system circuit 830 are connected to the host power supply 871 through two signal isolators 831 and 832 that prevent the touch signals of 400 KHz from passing through successfully.

The touch sampling element 8511 of the signal detection channel 851 in the touch signal detection unit 850 is connected between the touch excitation source 840 and the electrode line 82i-1 of the sensing line group 820, the buffer 8512 is connected to an end point where the touch sampling element 8511 is connected to the electrode line 82i-1, the buffer 8513 is connected to an end point where the touch sampling element 8511 is connected to the touch excitation source 840, an input end of the differential amplifier 8515 in the signal detection channel 851 is connected to the buffers 8512 and 8513 through the signal filter 8514, and an output end of the differential amplifier 8515 is connected to an input end of the data sampling path 853. The touch sampling element 8521 in the signal detection channel 852 is connected between the touch excitation source 840 and the electrode line 82i of the sensing line group 820, the buffer 8522 is connected to an end point where the touch sampling element 8521 is connected to the electrode line 82i, the buffer 8523 is connected to an end point where the touch sampling element 8521 is connected to the touch excitation source 840, an input end of the differential amplifier 8525 in the signal detection channel 852 is connected to the buffers 8522 and 8523 through the signal filter 8524, and an output end of the differential amplifier 8525 is connected to an input end of the data sampling path 854. Output ends of the data sampling paths 853 and 854 are respectively connected to two different ends of the data processing and timing control unit 855. The data processing and timing control unit 853 is connected to the host circuit 870 at the same time.

When a human finger 890 approaches or contacts the electrode lines 82i-1 and 82i, a coupling capacitance Cᵢ₋₁ is generated between the finger 890 and the electrode line 82i-1, and thus touch excitation signals output by the touch excitation source 840 to the electrode line 82i-1 flow into the finger through the coupling capacitance Cᵢ₋₁, then flow into the return-loop electrode 881 on the housing of the product through the palm that holds the product, and flow back to the touch excitation source 840 from the return-loop electrode 881; and a coupling capacitance Cᵢ is generated between the finger 890 and the electrode line 82i, and thus touch excitation signals output by the touch excitation source 840 to the electrode line 82i flow into the finger through the coupling capacitance Cᵢ, then flow into the return-loop electrode 881 on the housing of the product through the palm that holds the product, and flow back to the touch excitation source 840 from the return-loop electrode 881. A touch loop is formed by the touch excitation source, the electrode lines on the touch panel, the coupling capacitances between the finger and the electrode lines, and the return-loop electrode on the housing.

The touched electrode line can be found by detecting the change of the current in the touch signals flowing through the touch sampling elements 8511 and 8512. Since the electrode lines 82i-1 and 82i have the leading-out ends in different directions, and the electrode line has a certain resistance, when the finger contacts different positions of the electrode lines 82i-1 and 82i, if the line resistance from the output end of the touch excitation source to the touch point on the electrode line 82i-1 is large, the line resistance from the output end of the touch excitation source to the touch point on the electrode line 82i is small, and a current ratio of the touch signals on the electrode lines 82i-1 and 82i changes with the position of the finger 890 on the touched electrode line. The touch system circuit 830 sequentially selects a pair of the electrode lines in the electrode group 820 as the detecting lines in a scanning manner, so as to determine a touched electrode by comparing magnitudes of the changes of the touch signals on the different electrode lines, and determine a position of a touch point on the touched electrode according to the ratio of the touch signals flowing through the pair of the touched electrodes.

Although the touch panel 810 is closely attached to the display screen 861, since the planar electrode 811 is disposed on the surface of the touch panel 810 facing the display screen 861, the planar electrode 811 is connected to a grounding terminal of the host power supply 871, thus preventing the cross-talk and flowing of the touch signals between the touch system and the display system, and avoiding interference of the coupling capacitance between the touch screen and the display screen on the touch detection. Meanwhile, the signal filters 8514 and 8524 in the touch signal detection unit 850 also prevent interfering signals having frequencies other than 400 KHz from affecting the touch detection effect.

When multiple touch points exist, the touch points on different electrode lines can be distinguished by comparing the magnitudes of the touch signals on the different electrode lines in adjacent areas; while different touch points on the same electrode line can be distinguished by the sequence of time at which the touch points are touched. When two touch points move in a direction parallel to the electrode group 820, since the electrode lines in the electrode group 820 are fold lines, the movement of the touch point in any direction may pass through different electrode lines at different time, so that the position and moving direction of the touch point can be determined.

The above descriptions are merely preferred embodiments of the present invention, and are not intended to limit the scope of the invention. It is apparent to those of ordinary skill in the art that, modifications and variations can be made without departing from the spirit of the present invention, which should be covered in the protection scope of the present invention.

## Claims

1. A capacitive touch screen, comprising a touch substrate and a touch system circuit, wherein the touch system circuit has a touch excitation source and a touch signal detection unit, and sensing line groups are disposed on the touch substrate; when at least two groups of sensing lines are disposed on the touch substrate, each group of sensing lines are disposed on different touch substrates or disposed on the same touch substrate while being isolated with an insulating layer; the touch substrate is disposed on a product where the capacitive touch screen is applied, and the application product has a display system (comprising a display screen and a driving circuit thereof, and a backlight source and a driving circuit thereof); a first output end of the touch excitation source is used for applying touch signals to the connected electrode lines for at least some moments in a detection period; the touch signal detection unit is used for selecting at least a part of the electrode lines as touch detection electrodes for at least some moments in the detection period, so as to detect whether the part of the electrode lines are touched or not; and the touch detection electrodes are electrodes capable of detecting changes of the touch signals flowing there-through when applied with the touch signals, wherein
the touch system circuit also selects a part of the electrode lines on the touch substrate as touch return-loop electrodes when selecting the part of the electrodes as the detecting lines; and the touch return-loop electrodes are sensing lines, when the touch signals are applied to the touch detection electrodes and the changes of the touch signals flowing there-through are detected, in communication with a second output end of the touch excitation source or another touch excitation source for providing return-loop paths for the touch signals on the detecting lines.

2. The capacitive touch screen according to claim 1, wherein
the touch return-loop electrodes are a part or all of the electrode lines not intersecting the touch detection electrodes, or a part or all of the electrode lines intersecting the touch detection electrodes, or a part or all of the electrode lines intersecting and not intersecting the touch detection electrodes.

3. The capacitive touch screen according to claim 2, wherein
the touch return-loop electrodes not intersecting the touch detection electrodes are electrode lines adjacent to the touch detection electrodes on one or both sides thereof.

4. A capacitive touch screen, comprising a touch substrate and a touch system circuit, wherein the touch system circuit has a touch excitation source and a touch signal detection unit, and sensing line groups are disposed on the touch substrate; when at least two groups of sensing lines are disposed on the touch substrate, each group of sensing lines are disposed on different touch substrates or disposed on the same touch substrate while being isolated with an insulating layer; the touch substrate is disposed on a product where the capacitive touch screen is applied, and the application product has a display system (comprising a display screen and a driving circuit thereof, and a backlight source and a driving circuit thereof); a first output end of the touch excitation source is used for applying touch signals to the connected electrode lines for at least some moments in a detection period; the touch signal detection unit is used for selecting at least a part of the electrode lines as touch detection electrodes for at least some moments in the detection period, so as to detect whether the part of the electrode lines are touched or not; and the touch detection electrodes are electrodes capable of detecting changes of the touch signals flowing there-through when applied with the touch signals, wherein
electrodes are disposed on a housing of the application product; the touch system circuit selects the electrodes disposed on the housing of the application product as touch return-loop electrodes; and the touch return-loop electrodes are sensing lines, when the touch signals are applied to the touch detection electrodes and the changes of the touch signals flowing there-through are detected, in communication with a second output end of the touch excitation source or another touch excitation source for providing return-loop paths for the touch signals on the detecting lines.

5. The capacitive touch screen according to claim 1 or 4, wherein
the touch substrate is a flexible or rigid transparent substrate.

6. The capacitive touch screen according to claim 1 or 4, wherein
the sensing lines are display screen electrodes.

7. The capacitive touch screen according to claim 1 or 4, wherein
the touch system circuit performs touch detection on multiple touch detection electrodes on the touch substrate simultaneously.

8. The capacitive touch screen according to claim 1 or 4, wherein
the touch signals at different output ends of the same touch excitation source or at output ends of different touch excitation sources in communication with the touch detection electrodes and the touch return-loop electrodes are different.

9. The capacitive touch screen according to claim 8, wherein
the difference between the touch signals lies in at least one of amplitude, phase, and frequency of the touch signals.

10. The capacitive touch screen according to claim 1 or 4, wherein
a signal isolator is disposed between a host circuit and a display system of the touch system circuit and the application product, or between a host circuit power supply and a display system power supply of a touch system circuit power supply and the application product, or between a host circuit power supply and a display system power supply of the touch excitation source of the touch system circuit and the application product; and the signal isolator is a high resistor of the touch signals.

11. The capacitive touch screen according to claim 1 or 4, wherein
the sensing lines on the touch substrate are a group of non-intersecting electrode lines, the touch system circuit determines a touched electrode by comparing magnitudes of the changes of the touch signals on the different electrode lines, and a position of a touch point on the touched electrode is determined according to the magnitudes of the changes of the touch signals flowing through the touched electrode.

12. The capacitive touch screen according to claim 1 or 4, wherein
the sensing lines on the touch substrate are a group of non-intersecting electrode lines, the different electrode lines have leading-out ends in different directions, and the electrode lines having the leading-out ends in different directions are taken as the detecting lines; the touch system circuit determines a touched electrode by comparing magnitudes of the changes of the touch signals on the different sensing lines, and a position of a touch point on the touched electrode is determined according to the magnitudes of the changes of the touch signals on the detecting lines having the leading-out ends in different directions.

13. The capacitive touch screen according to claim 11 or 12, wherein
the non-intersecting electrode lines are fold lines.
